(19) **Europäisches Patentamt / European Patent Office / Office européen des brevets**

(11) **EP 4 032 354 B1**

(12) **FASCICULE DE BREVET EUROPEEN**

(45) Date de publication et mention
de la délivrance du brevet:
**30.04.2025 Bulletin 2025/18**

(21) Numéro de dépôt: **20733282.6**

(22) Date de dépôt: **18.06.2020**

(51) Classification Internationale des Brevets (IPC):
*H04W 72/54* (2023.01)    *H04W 72/56* (2023.01)
*H04W 28/02* (2009.01)

(52) Classification Coopérative des Brevets (CPC):
**H04W 72/54; H04W 72/56;** H04W 28/021

(86) Numéro de dépôt international:
**PCT/EP2020/066863**

(87) Numéro de publication internationale:
**WO 2021/052640 (25.03.2021 Gazette 2021/12)**

(54) **DISPOSITIF ET PROCÉDÉ POUR LE CONTRÔLE DE CONGESTION DE CANAL DANS LES SYSTÈMES DE TRANSPORT INTELLIGENTS**

**VORRICHTUNG UND VERFAHREN ZUR KANALÜBERLASTUNGSSTEUERUNG IN INTELLIGENTEN TRANSPORTSYSTEMEN**

**DEVICE AND METHOD FOR CONTROLLING CHANNEL CONGESTION IN INTELLIGENT TRANSPORT SYSTEMS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2019 FR 1910419**

(43) Date de publication de la demande:
**27.07.2022 Bulletin 2022/30**

(73) Titulaire: **Ampere SAS**
**92100 Boulogne-Billancourt (FR)**

(72) Inventeurs:
• **HARRI, Jerome**
**06700 SAINT-LAURENT-DU-VAR (FR)**
• **KHAN, Irfan**
**06410 BIOT (FR)**
• **SESIA, Stéfania**
**06330 ROQUEFORT LES PINS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
• **KHAN I ET AL: "Integration Challenges of Facilities-Layer DCC for Heterogeneous V2X Services", 2018 IEEE INTELLIGENT VEHICLES SYMPOSIUM (IV), IEEE, 26 June 2018 (2018-06-26), pages 1131 - 1136, XP033423471, DOI: 10.1109/IVS.2018.8500572**
• **KHAN I ET AL: "Flexible Packet Generation Control for Multi-Application V2V Communication", 2018 IEEE 88TH VEHICULAR TECHNOLOGY CONFERENCE (VTC-FALL), IEEE, 27 August 2018 (2018-08-27), pages 1 - 5, XP033535272, DOI: 10.1109/ VTCFALL.2018.8690653**
• **KHAN MOHAMMAD IRFAN ET AL: "In Vehicle Resource Orchestration for Multi-V2X Services", 2019 IEEE 90TH VEHICULAR TECHNOLOGY CONFERENCE (VTC2019-FALL), IEEE, 22 September 2019 (2019-09-22), pages 1 - 5, XP033648557, DOI: 10.1109/ VTCFALL.2019.8891527**

## Description

### Domaine technique

L'invention concerne de manière générale les systèmes de transport intelligents et en particulier le contrôle de congestion de canal dans les communications entre les stations connectées dans les systèmes de transport intelligents.

### Art Antérieur

L'évolution des technologies de l'information et de la communication a permis ces dernières années l'émergence, dans le domaine des transports, de systèmes de transport intelligents STI ('Intelligent Transportation System' en langue anglo-saxonne ou ITS) coopératifs. Les systèmes de transport intelligents mettent en oeuvre une infrastructure et des dispositifs véhiculaires connectés pour accroître la sécurité routière et rendre les transports plus sûrs, plus efficaces, et plus durables.

Les principaux objectifs techniques visent à développer des dispositifs embarqués à bord des véhicules d'une part et déployés dans des unités de bord de route d'autre part pour l'amélioration de la sécurité routière et reposant sur une communication rapide et sécurisée entre véhicules, infrastructure, et usagers.

Les technologies de communication utilisées par un véhicule pour communiquer avec son environnement sont basées sur les standards élaborés dans le périmètre du C-ITS ('Cooperative-Intelligent Transportation system' en langue anglo-saxonne) et de l'ETSI (acronyme de 'European Telecommunication Standard Institute') et visent comme principales classes d'applications la sécurité routière, la gestion du trafic routier, et les applications de confort.

Les communications qui concernent la sécurité routière génèrent en général des données transmises de véhicule à véhicule. On parle de communications V2V ('Vehicle to Vehicle' en langue anglo-saxonne).

Les communications qui concernent la gestion du trafic routier génèrent des données échangées entre les véhicules et l'infrastructure routière (par exemple le fournisseur de service routier). On parle dans ce cas de communications V2I ('Vehicle to Infrastructure' en langue anglo-saxonne) et de communications I2V ('Infrastructure to Vehicle' en langue anglo-saxonne).

Les communications V2I comprennent les messages et les données qui sont générés par les véhicules sur les situations qu'ils rencontrent (par exemple une route glissante, un freinage d'urgence, etc..) et qui sont interceptés par des entités de l'infrastructure comme par exemple le gestionnaire routier.

Les communications I2V comprennent les informations sur les chantiers, la viabilité hivernale, les conditions de trafic, etc., transmises par exemple par le gestionnaire routier aux véhicules connectés.

D'autres services peuvent impliquer d'autres acteurs que le gestionnaire routier, tel est le cas des échanges d'informations entre véhicules et piétons V2P ('Vehicle to Pedestrian' en langue anglo-saxonne') ou P2V ('Pedestrian to Vehicle' en langue anglo-saxonne). La communication entre un véhicule et tout objet dans un système de transport intelligent est appelée V2X ('Vehicle to Everything' en langue anglo-saxonne). Les communications V2X comprennent les communications V2V, V2I, V2P, et V2N pour 'Vehicle to Network'.

Les technologies de communication actuellement utilisées pour assurer la connexion des différents acteurs dans un système de transport intelligent comprennent :

- la technologie ITS-G5 qui est une technologie basée sur la norme WiFi™ 802.11p, et

- des technologies dérivées des réseaux cellulaires (ex. 2G/3G/4G).

La technologie ITS-G5 opère dans la bande non licenciée 5.9 GHz et s'appuie sur des unités de bord de route déployées par le gestionnaire routier. Les stations ITS-G5 (par exemple véhicules et unités de bord de route) constituent un réseau de communication ad-hoc purement distribué opérant sans coordinateur. Le fait qu'il s'agisse d'une bande non licenciée implique que toute technologie respectant les exigences associées à la bande non licenciée peut utiliser cette bande, ce qui peut provoquer des difficultés de congestion du canal de transmission.

La couche physique de la technologie ITS-G5 met en œuvre le multiplexage par répartition orthogonale. La couche d'accès adopte le protocole IEEE 802.11e avec le mode EDCA (acronyme pour 'Enhanced Distributed Channel Access' en langue anglo-saxonne). Ce protocole définit quatre catégories d'accès au canal de transmission ou encore quatre priorités : une priorité dite « voix », une priorité dite « vidéo », une priorité dite « Best effort » qui traduit un effort au mieux mais sans garantie totale, et une priorité dite « background » inférieure aux précédentes.

Une des principales technologies dérivées des réseaux cellulaires est la technologie LTE-V2X ou C-V2X (acronyme de 'Cellular-V2X'), utilisant la technologie LTE. La technologie LTE-V2X permet les communications V2X (V2V, V2I, et V2P) dans la bande de fréquence 5.9 GHz et dans les bandes de fréquences des opérateurs mobiles et supporte deux interfaces radio, à savoir, l'interface cellulaire Uu et l'interface PC5. L'interface PC5 inclut deux modes de communication, appelés mode 3 et mode 4. En mode 3, le réseau cellulaire affecte et gère les ressources utilisées par les dispositifs connectés pour leurs communications. Le mode 3 est ainsi uniquement disponible lorsque les dispositifs sont sous couverture cellulaire. En mode 4, les dispositifs connectés sélectionnent de manière autonome les ressources radio avec ou sans l'intervention du réseau pour les communications directes.

Les différentes technologies actuellement utilisées mettent en œuvre des techniques différentes pour la gestion des flux des données générés par les différentes stations connectées dans un système de transport intelligent et le contrôle de la congestion réseau en présence de plusieurs dispositifs connectés partageant l'accès aux canaux de transmission disponibles.

Par exemple, la technologie ITS-G5 met en œuvre une fonctionnalité de contrôle de congestion distribué qui emploie plusieurs techniques pour le contrôle de congestion comprenant le contrôle de la puissance de transmission ('Transmit Power Control' en langue anglo-saxonne ou TPC), le contrôle du taux de transmission ('Transmit Rate Control' en langue anglo-saxonne ou TRC), et le contrôle du débit de transmission ('Transmit Debit Control' en langue anglo-saxonne ou TDC). Utilisant les techniques de TPC, la puissance d'émission est modifiée au niveau d'une station émettrice pour ajuster la charge actuelle du canal de transmission. Les techniques de TRC permettent de réguler le temps entre deux paquets consécutifs transmis par une station ITS-G5. Les techniques de TDC utilisent des mécanismes de la régulation automatique du débit.

Chaque station ITS-G5 contrôle de façon décentralisée la charge du canal de transmission en estimant un taux d'occupation du canal ('Channel Occupancy Ratio' en langue anglo-saxonne ou CR) qui fournit une indication du niveau de congestion du canal et permet de déterminer et ajuster le taux de transmission et la taille des paquets à transmettre par chaque station ITS-G5. Les quatre niveaux de priorités d'accès au canal de transmission mis en œuvre au niveau de la couche d'accès permettent de renforcer les mécanismes de contrôle de congestion en classifiant les différents paquets générés par les différentes applications dans une file d'attente de paquets selon leurs priorités et en régulant l'accès au canal de transmission selon un mécanisme 'premier entré-premier sorti' ('First In First Out' en langue anglo-saxonne ou FIFO).

Le mode 3 de communication de la technologie LTE-V2X ne met pas en œuvre un contrôle distribué de la congestion de canal, l'allocation et la gestion des ressources radio étant réalisées par le eNodeB qui gère les sous-canaux de transmission et détermine la façon de réduire l'occupation des canaux.

En revanche, la technologie LTE-V2X prend en charge le contrôle de congestion dans le mode 4 et met en œuvre des mécanismes possibles pour réduire la congestion du canal de transmission. En mode 4, chaque station LTE-V2X estime le taux d'occupation du canal et en fonction du niveau de congestion du canal, la station décide l'abandon du paquet, l'ajustement de la taille et/ou du nombre des paquets à transmettre, ou la régulation du taux de génération des paquets au niveau de la couche applicative par les différentes applications exécutées au niveau de la station LTE-V2X. Le mode 4 ne met pas en œuvre le classement des paquets en files d'attente selon leurs niveaux de priorité. Les paquets sont abandonnés si le niveau de congestion du canal ne peut pas supporter le quota d'utilisation du canal de la station LTE-V2X. A chaque fois qu'une opportunité de transmission est déterminée par la couche d'accès, les différentes applications régulent leurs taux de génération de paquets pour éviter de générer les paquets trop tôt ou de générer des paquets en excès qui risqueraient d'encombrer les files d'attente de l'unité en charge du contrôle du flux de données au niveau de la couche d'accès.

Le mécanisme de contrôle de congestion centralisé utilisé dans le mode 4 de la technologie LTE-V2X a été récemment renforcé par un mécanisme de contrôle de la génération des paquets. Ce mécanisme permet de contrôler le taux de génération des paquets par le biais d'un processus qui fait respecter la périodicité de la génération des paquets de manière à ce que chaque opportunité de génération de paquets par les applications exécutées par une station LTE-V2X est suivie d'une période d'abstention obligatoire.

Bien que les technologies utilisées pour les communications dans les systèmes de transport intelligents utilisent des mécanismes de contrôle de flux et de gestion d'accès au canal de transmission, ces mécanismes présentent des limitations et ne permettent pas un contrôle efficace de la congestion du canal.

En effet, les mécanismes de contrôle du taux de transmission et de contrôle de congestion distribué basés sur les niveaux de priorités statiques peuvent causer la stagnation des paquets relatifs à la classe de trafic ayant la priorité la plus faible et ne permettent pas de caractériser de façon dynamique les niveaux de priorités des différentes applications de sécurité ou autre en fonction de l'urgence à transmettre les données ou de l'importance des données à transmettre (par exemple des messages générés par des applications de sécurité signalant une situation critique urgente).

En outre, les mécanismes d'établissement des priorités des paquets sont statiques et sans coordination adéquate entre les différentes applications exécutées, ce qui ne permet pas de gérer de façon optimale les priorités des différents services et des différents types de messages et de tenir compte des exigences des différentes applications en termes de qualité de service.

La qualité de service est définie sur la base d'un groupe de propriétés comprenant par exemple l'urgence, l'utilité, la portée, la latence, la classe du trafic, le taux de perte de messages, le débit de données, la vitesse maximale supportant l'application, la disponibilité, la taille des messages transmis, le nombre de messages transmis, la fiabilité en taux d'erreurs acceptable, et l'âge de l'information ou un sous ensemble de ces propriétés.

De plus, les mécanismes de contrôle de congestion existants ne permettent pas une coordination entre la couche d'accès et les différentes applications qui génèrent les données échangées entre les différentes stations connectées dans un système de transport intelligent, ce qui peut produire des situations de conflit ou d'incompatibilité ainsi que des performances sous-optimales surtout en présence de messages de types différents et d'applications de classes ou priorités différentes.

Il existe donc un besoin pour développer des techniques de contrôle de congestion efficaces qui permettent d'ordonnancer la génération et la transmission des messages de types différents produits par des applications différentes exécutées par une station connectée dans un système de transport intelligent.

L'article "Integration Challenges of Facilities-Layer DCC for Heterogeneous V2X Services", de KHAN I ET AL, dans 2018 IEEE INTELLIGENT VEHICLES SYMPOSIUM (IV), IEEE, 26 juin 2018 (2018-06-26), pages 1131-1136, traite du contrôle de congestion distribué (DCC) pour les Services V2X Hétérogènes.

**Définition Générale de l'invention**

A cet effet, l'invention a pour but de fournir un dispositif et un procédé pour le contrôle de congestion de canal de transmission dans une station ITS exécutant au moins deux applications différentes qui génèrent au moins deux messages de types différents.

Plus précisément, l'invention fournit un procédé pour la transmission de messages, dans un canal physique ou radio-fréquentiel, par au moins deux applications s'exécutant dans une station ITS, lesdits messages comprenant au moins deux messages de types différents. Le procédé est caractérisé en ce qu'il comprend les étapes consistant à :

- déterminer un ensemble de propriété relatives à une qualité de service cible ;

- déterminer, en association avec chaque application et chaque type de message, un ensemble de valeurs d'indicateurs de qualité de service, chaque valeur de qualité de service représentant une propriété relative à ladite qualité de service cible ;

- sélectionner, pour chaque type de message, un ensemble de valeurs d'indicateurs de qualité de service selon un critère de sélection dépendant de spécifications de qualité de service ;

- déterminer, pour chaque type de message, un coefficient de priorité en fonction des valeurs de l'ensemble de valeurs de qualité de service sélectionné ;

- déterminer, pour chaque type de message, un taux d'allocation de ressources en fonction des coefficients de priorité associés à tous les types de messages ;

- déterminer, pour chaque type de message, une part de ressources du canal en fonction dudit taux d'allocation de ressources et d'une limite d'utilisation du canal ;

- déterminer, pour chaque application, un stock de ressources pour le cycle courant;

- générer et transmettre le message de l'application ayant le plus grand stock de ressources.

Selon certains modes de réalisation, la détermination de l'ensemble de valeurs d'indicateurs de qualité de service associé à chaque type de message peut être effectuée par chacune desdites au moins deux applications.

Selon d'autres modes de réalisation, la détermination d'au moins une partie de l'ensemble de valeurs d'indicateurs de qualité de service cible associé à au moins un type de message peut être effectuée de façon automatique.

Selon certains modes de réalisation, une propriété relative à la qualité de service cible peut être choisie dans un groupe comprenant l'urgence, l'utilité, la portée, la latence, la classe du trafic, le taux de perte de messages, le débit de données, la vitesse maximale supportant l'application, la disponibilité, la taille des messages transmis, le nombre de messages transmis, la fiabilité en taux d'erreurs acceptable, et l'âge de l'information.

Selon certains modes de réalisation, l'ensemble de propriétés relatives à une qualité de service cible peut être déterminé de façon dynamique et variable dans le temps en fonction du type d'au moins une application requérant la transmission d'au moins un message.

Selon certains modes de réalisation, la part de ressources du canal peut être déterminée pour chaque type de message de façon dynamique dépendamment d'un ou plusieurs paramètres comprenant le niveau de congestion et l'information reçue par au moins une desdites au moins deux applications.

Selon certains modes de réalisation, le stock de ressources de l'application ayant transmis un message peut être mis à jour, un stock de ressources modifié en association avec ladite application étant déterminé en fonction du stock de ressources associé à ladite application au cycle courant et de la taille du message généré et transmis par ladite application.

Selon certains modes de réalisation, le coefficient de priorité associé à un type de message peut être déterminé comme étant la somme pondérée des valeurs de l'ensemble de valeurs d'indicateurs de qualité de service sélectionné pour ce type de message, la somme pondérée étant définie par un ensemble de coefficients prédéterminés.

L'invention fournit en outre un dispositif pour la transmission de messages, dans un canal physique ou radio-fréquentiel, par au moins deux applications s'exécutant dans une station ITS, lesdits messages comprenant au moins deux messages de types différents, le dispositif étant caractérisé en ce qu'il comprend un calculateur de ressources configuré pour :

- déterminer un ensemble de propriété relatives à une qualité de service cible ;

- recevoir, en association avec chaque application et chaque type de message, un ensemble de valeurs d'indicateurs de qualité de service, chaque valeur de qualité de service représentant une propriété relative à la qualité de service cible ;

- sélectionner, pour chaque type de message, un ensemble de valeurs d'indicateurs de qualité de service selon un critère de sélection dépendant de spécifications de qualité de service ;

- déterminer, pour chaque type de message, un coefficient de priorité en fonction des valeurs de l'ensemble de valeurs de qualité de service sélectionné;

- déterminer, pour chaque type de message, un taux d'allocation de ressources en fonction des coefficients de priorité associés à tous les types de messages ;

- déterminer, pour chaque type de message, une part de ressources du canal en fonction dudit taux d'allocation et d'une limite d'utilisation du canal ;

- déterminer, pour chaque application, un stock de ressources pour le cycle courant; l'application ayant le plus grand stock de ressources étant configurée pour transmettre au moins un message.

Avantageusement, les modes de réalisation de l'invention fournissent un dispositif et un procédé pour gérer de manière efficace le partage des opportunités de transmission entre au moins deux applications différentes s'exécutant sur une station ITS communicant dans un système de transport intelligent et générant au moins deux messages de types différents exigeant une qualité de service différente.

Avantageusement, les modes de réalisation de l'invention fournissent un dispositif et un procédé pour un contrôle efficace de la congestion canal et de l'accès aux ressources radio dans une station ITS communicant dans un système de transport intelligent en tenant compte des exigences des différentes applications de sécurité et des applications non liées à la sécurité.

Avantageusement, les modes de réalisation de l'invention permettent d'éviter le problème de stagnation de paquets moyennant une caractérisation de la priorité de chaque application et de chaque type de message de façon dynamique tenant compte de paramètres de qualité de service statiques et dynamiques indicatifs de spécifications et exigences de chaque application et chaque service en termes de qualité de service.

Avantageusement, les modes de réalisation de l'invention fournissent un ordonnancement et une allocation de ressource intelligents interagissant entre les différentes couches protocolaires de l'architecture d'une station ITS communicant dans un système de transport intelligent, l'interaction entre les différentes couches permettant de tenir compte à la fois des exigences des applications s'exécutant à la couche applicative, des conditions de génération des paquets, ainsi que des limites et opportunités de transmissions indiquées par la couche d'accès au canal de transmission.

Avantageusement, les modes de réalisation de l'invention permettent de gérer de façon centralisée et optimale les opportunités de transmission de messages de types différents pour les différentes applications concurrentes requérant l'accès aux mêmes ressources (canaux de transmission, bandes passantes, etc.) et de gérer la congestion multi-message/multi-application.

Avantageusement, les modes de réalisation de l'invention permettent de gérer les priorités d'accès au canal dans une station ITS communicant dans un système de transport intelligent pour les différentes applications et les différents services en tenant compte des exigences de chaque application et de chaque service en termes de qualité de service.

Avantageusement, les modes de réalisation de l'invention permettent de gérer les ressources radio de façon flexible en fonction des exigences de qualité de service de chaque application et de chaque type de message et de service pour une station ITS équipée de moyens de communication dans un système de transport intelligent.

**Brève description des dessins**

D'autres caractéristiques et avantages de l'invention apparaîtront à l'aide de la description qui suit faite en référence aux dessins annexés, donnés à titre d'exemple, et qui représentent, respectivement :

[Fig.1] La figure 1 est un schéma représentant un exemple d'environnement d'un système de transport intelligent, selon certains modes de réalisation de l'invention.

[Fig.2] La figure 2 est un diagramme représentant un exemple d'architecture en blocs d'une station ITS, selon certains modes de réalisation de l'invention.

[Fig.3] La figure 3 est un logigramme représentant un procédé pour la gestion de la génération et la transmission de messages dans une station ITS, selon certains modes de réalisation de l'invention.

[Fig.4] La figure 4 représente des diagrammes évaluant des performances en termes de temps inter-transmission requis par chaque service en fonction de la densité des nœuds, selon des techniques de contrôle de congestion de l'art antérieur.

[Fig.5] La figure 5 représente des diagrammes évaluant des performances en termes de temps inter-transmission requis par chaque service en fonction de la densité des nœuds, selon certains modes de réalisation de l'invention.

[Fig.6] La figure 6 représente des diagrammes évaluant des performances en termes de temps inter-transmission requis par chaque service en fonction de la densité des nœuds, selon certains modes de réalisation de l'invention.

[Fig.7] La figure 7 représente des diagrammes évaluant des performances en termes de temps inter-transmission requis par chaque service en fonction de la densité des nœuds, selon certains modes de réalisation de l'invention.

**Description détaillée**

Les modes de réalisation de l'invention fournissent un dispositif pour la gestion de la génération et la transmission de messages dans une station ITS dotée de moyens de communications pour communiquer dans un système de transport intelligent, la station ITS exécutant au moins deux applications différentes, les deux applications générant au moins deux messages de types différents.

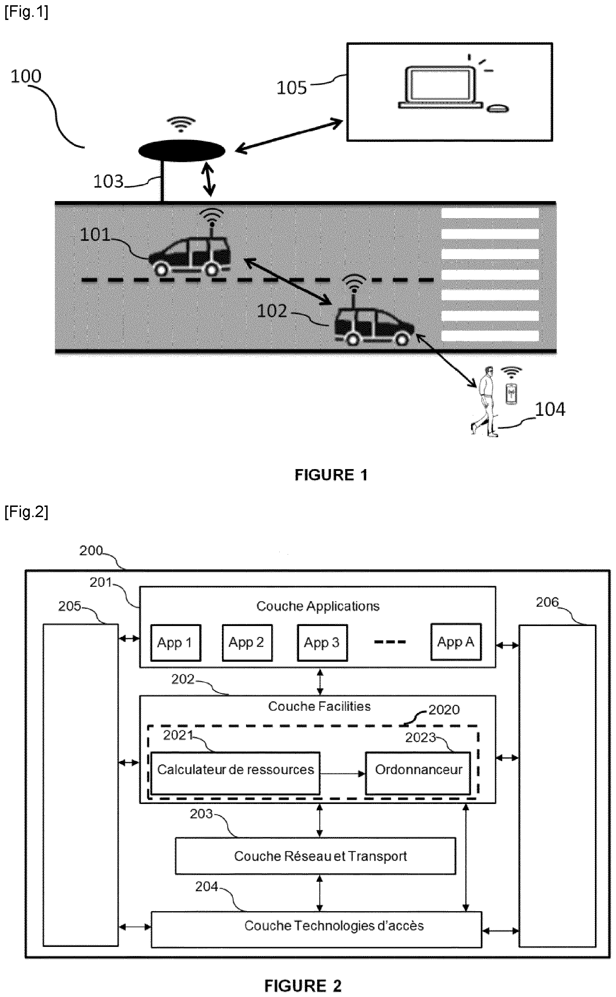

La figure 1 représente un exemple d'environnement d'un système de transport intelligent 100 selon certains modes de réalisation de l'invention dans lequel peut être utilisé un dispositif et un procédé pour le contrôle de congestion dans une station ITS communicant dans le système de transport intelligent 100 en exécutant au moins deux applications différentes, l'au moins deux applications différentes générant au moins deux messages de types différents.

Selon certains modes de réalisation, le système de transport intelligent 100 peut comprendre un ou plusieurs véhicules connectés, une ou plusieurs unités de bord de route qui permettent d'établir une communication entre l'infrastructure et les véhicules, un système configuré pour assurer le lien entre les unités de bord de routes et un centre de gestion du trafic, et un système de sécurité.

Selon certains modes de réalisation, le système de sécurité (non illustré sur la figure 1) peut être configuré pour mettre en œuvre des fonctionnalités de sécurité comprenant :

- l'authentification et l'autorisation des émetteurs pour permettre seulement aux entités de confiance de participer au système de communication dans le système de transport intelligent 100 ;

- l'intégrité des données pour garantir que les données envoyées ne sont pas manipulées par des entités malveillantes ;

- la confidentialité du contenu des messages envoyés, et

- la protection de la vie privée dans le réseau de transport intelligent 100.

Selon certains modes de réalisation, une unité de bord de route (fixe ou mobile) peut être un pylône, un panneau à message variable, ou tout dispositif doté de moyens de communications lui permettant de transmettre et/ou recevoir des données échangées dans le système de transport intelligent.

Le système de transport intelligent 100 peut être utilisé pour différentes applications dans le domaine des transports. Les principaux domaines d'application du système de transport intelligent 100 comprennent sans limitation :

- la sécurité routière pour assister les conducteurs et permettre de diminuer le nombre d'accidents et donc le nombre de victimes des accidents de la route ainsi que les dégâts matériels ;

- la mobilité et l'efficacité des transports en mettant à disposition des conducteurs des données sur l'état du système de transport et des conditions de trafic pour permettre de diminuer le temps de transport et d'améliorer la fiabilité dans le temps de parcours ;

- les services d'information et les services de confort à valeur ajoutée en mettant à disposition des services envers le conducteur et les passagers leur permettant de réaliser des tâches personnelles pendant leurs transports ;

- l'environnement pour suivre l'évolution des conditions de trafic, favorisant une diminution de la consommation en carburant et donc des émissions en Gaz à Effet de Serre et en polluants atmosphériques.

Le domaine d'application de la sécurité routière comprend, à titre d'exemples non limitatifs :

- des classes d'applications de sensibilisation coopérative ('Coperative Awareness Applications' en langue anglo-saxonne), par exemple la gestion de la voie de dépassement, avertissement de changement de voie, la gestion de la vitesse, la gestion du sens de circulation, la détection des usagers de la route ;

- les classes d'applications d'avertissement de danger ('Hazard Warning Applications' en langue anglo-saxonne), par exemple la détection de l'état des routes, la détection des dangers, la détection des files d'attente et des conditions météorologiques défavorables comme les brouillards, etc.

Le domaine d'application de l'efficacité du trafic routier comprend, à titre d'exemples non limitatifs les classes d'applications pour l'efficacité du trafic interurbain et de la circulation urbaine, par exemple les services de signalisation électronique adaptative de la circulation, la détection et gestion des incidents, la gestion des panneaux à messages variables, le guidage routier et la navigation à l'aide de données en temps réel sur la circulation avec des itinéraires spéciaux pour des types de véhicules particuliers, l'optimisation des flux de trafic, la priorité pour certains types de véhicules comme les bus et les véhicules d'urgence, etc.

Le domaine d'application des services d'information et de services à valeur ajoutée comprend, à titre d'exemples non limitatifs, les classes d'applications fournissant des services à valeur ajoutée comme l'accès aux connexions locales (par exemple les applications de service de véhicule à véhicule ou de véhicule à route pour fournir des informations sur les problèmes de circulation et l'état de la route) et l'accès Internet à haut débit (par exemple les applications de service par des connexions sans fil pour fournir la planification de voyage et d'autres informations provenant de fournisseurs de services tels que les hôtel, les restaurants, le cinéma, etc.).

Chaque application fournit ou permet de réaliser un service spécifique. Selon certains modes de réalisation, un service peut être choisi parmi une catégorie de services, comprenant, sans limitation, les services pour :

- la collecte de données (ex. collecte de données de trafic, remontée d'évènements détectés automatiquement, remontée d'évènements déclarés manuellement) ;

- l'alerte de chantiers (ex. alerte chantier programmé fixe ou mobile, alerte véhicule gestionnaire en approche, alerte véhicule gestionnaire en intervention, alerte véhicule gestionnaire en patrouille, viabilité hivernale (salage en cours, déneigement en cours, véhicule en mouvement)) ;

- la signalisation embarquée ;

- l'alerte des évènements inopinés et dangereux (ex. alerte route temporairement glissante, alerte animal sur la route, alerte personne sur la route, alerte obstacle sur la route, alerte véhicule arrêté/en panne, alerte zone d'accident, alerte visibilité réduite, alerte contresens, alerte obstruction non gérée d'une route, alerte freinage d'urgence, alerte queue de bouchon, alerte véhicule d'urgence en approche) ;

- l'information routière et le re-routage (ex. alerte conditions météorologiques exceptionnelles, avertissement sur la modification des voies de circulation) ;

- le stationnement ;

- la gestion du trafic ;

- etc.

Divers modes de communications peuvent être supportés dans le système de transport intelligent 100 pour fournir les services requis, comprenant notamment les communications V2V entre véhicules, les communications V2I et I2V entre véhicules et infrastructure, et les communications V2P et P2V entre véhicules et piétons.

En référence à la figure 1, les communications dans le système de transport intelligent 100 peuvent impliquer plusieurs acteurs comprenant le véhicule 101, le véhicule 102, une unité de bord de route 103, un piéton 104, et un centre de gestion de trafic 105.

Les communications V2V sont assurées par les différents véhicules pour recueillir et transmettre des informations acquises par les différents capteurs embarqués dans les véhicules. Par exemple, le véhicule 101 et le véhicule 102 peuvent communiquer des informations relatives à l'état de la route ou du trafic routier moyennant une communication V2V.

Les communications V2I permettent aux véhicules connectés de remonter des informations au centre de gestion de trafic du gestionnaire de l'infrastructure. Par exemple, le véhicule 101 peut être configuré pour communiquer des informations au centre de gestion de trafic 105 via une communication avec l'unité de bord de route 103.

Les communications I2V permettent de transmettre des informations aux véhicules connectés. Par exemple, le centre de gestion de trafic 105 peut être configuré pour diffuser des informations qui s'affichent dans le véhicule 101 via l'unité de bord de route 103.

Selon certains modes de réalisation, les communications entre les différentes entités du système de transport intelligent 100 peuvent donner lieu à l'échange de messages V2X comprenant, sans limitation, les messages :

- CAM (acronyme de 'Cooperative Awareness Message' en langue anglo-saxonne) ;

- DENM (acronyme de 'Decentralized Environmental Notification Message' en langue anglo-saxonne) ;

- CPM (acronyme de 'Collective Perception Message' en langue anglo-saxonne) ;

- MCM (acronyme de 'Maneuver Coordination Message' en langue anglo-saxonne) ;

- MAP (acronyme de 'Intersection geometry and topology' en langue anglo-saxonne) ;

- SPat (acronyme de 'Signal Phase and Timing' en langue anglo-saxonne) ;

- EM (acronyme de 'Event Message' en langue anglo-saxonne) ;

- PM (acronyme de 'Periodic Message' en langue anglo-saxonne) ; et

- SM (acronyme de 'Service Message' en langue anglo-saxonne).

Selon certains modes de réalisation, la technologie utilisée pour assurer les communications entre les différentes unités (véhicules, équipements utilisateurs, unité de bord de route, centre de gestion de trafic) dans le système de transport intelligent 100 peut être choisie dans un groupe comprenant, à titre d'exemple non limitatif, la technologie ITS-G5, n'importe quelle technologie d'accès sans fil dérivée des réseaux cellulaires (par exemple les réseaux 2G, 3G, 4G, LTE, LTE-V2X).

Selon certains modes de réalisation, la technologie utilisée peut être la technologie ITS-G5. Elle utilise une technologie WiFi™ adaptée à des mobiles à forte vitesse et permet des échanges V2X avec une latence très faible adaptée à des cas d'usage de sécurité routière. L'interface avec l'infrastructure peut se faire via des unités de bord de route. Les communications ITS-G5 peuvent être utilisées pour transmettre les données véhicules (ex. la vitesse, la position, la trajectoire), les données dynamiques de perception de l'environnement, etc.

Selon certains modes de réalisation, la technologie ITS-G5 peut être hybridée avec les réseaux cellulaires.

Selon certains modes de réalisation utilisant la technologie LTE-V2X, les communications peuvent se baser sur le mode 3 ou le mode 4.

Selon certains modes de réalisation, les communications peuvent s'appuyer sur les réseaux cellulaires de la future génération 5G, sur la technologie Li-Fi (acronyme de 'Light-Fidelity' en langue anglo-saxonne) utilisant la lumière comme support de transmission des données, ou sur les réseaux satellites.

Dans la suite de la description des modes de réalisation de l'invention, une station ITS (ci-après dénommée aussi 'station V2X' ou 'équipement à bord' ou 'unité embarquée') réfère à toute station ou entité ou composant doté d'une pile protocolaire V2X et configurée pour communiquer, selon une technologie de communication donnée, avec une ou plusieurs stations ITS au sein du système de transport intelligent 100. Une station ITS peut être, sans limitation, une unité embarquée dans un véhicule (dans ce cas appelée 'On Board Unit' en langue anglo-saxonne), une unité de bord de route, une station d'un centre de contrôle, ou un équipement utilisateur (par exemple un téléphone portable, une tablette).

Selon certains modes de réalisation, une station ITS peut comprendre un ensemble de fonctionnalités et un ensemble de dispositifs configurés pour mettre en œuvre ces fonctionnalités. En particulier, une station ITS peut comprendre des moyens de traitement, de communication, et des technologies de capteurs et d'interface homme/machine. Les stations ITS interconnectées peuvent être configurées pour traiter les informations qui les concernent et leurs environnements et échanger ces informations en temps réel avec d'autres stations ITS à proximité.

Selon certains modes de réalisation, les données provenant des capteurs embarqués dans une station ITS peuvent comprendre la vitesse (dans le cas d'une unité embarquée d'un véhicule), la direction, la température, l'état des airbags, des données provenant des caméras anticollision, des données provenant des radars de parkings, des données provenant des émetteurs/récepteurs ultra-sons, etc.

Selon certains modes de réalisation, les moyens de communication d'une station ITS peuvent comprendre des technologies avec différentes caractéristiques (ex. taux de transmission, portée, puissance d'émission, bandes de fréquence, etc.). Les moyens de communications peuvent être équipés d'un ou plusieurs émetteurs/récepteurs à bord pour établir une ou plusieurs liaisons sans fil avec d'autres entités du système de transport intelligent : d'autres véhicules, des unités de bord de route, ou des postes/centres de contrôle. Les communications entre les stations ITS peuvent être directes ou indirectes (par exemple via des stations relais comme les unités de bord de route).

Selon certains modes de réalisation, une station ITS peut être statique (par exemple une unité de bord de route fixe) ou mobile (par exemple une unité embarquée dans un véhicule), équipée d'une ou de plusieurs antennes (mettant en œuvre des technologies de transmission à antennes multiples).

En référence à la figure 2, un exemple d'architecture protocolaire (ci-après dénommée aussi 'pile V2X') d'une station ITS 200 est illustré. La station ITS 200 peut être configurée de manière à utiliser une technologie de communication quelconque choisie parmi un groupe comprenant la technologie ITS-G5, une technologie dérivée des réseaux cellulaires 2G/3G/4G/5G (ex. la technologie LTE-V2X), une technologie utilisant le Li-Fi ou les réseaux satellites. La station ITS 200 supporte une pluralité d'applications qui génèrent des messages comprenant au moins deux messages de types différents. Un exemple de type de message peut être choisi dans un groupe comprenant, sans limitation, les messages CAM, DENM, CPM, MCM, MAP SPat, EM, PM, et SM. Les messages de type CAM contiennent des informations sur l'état de la station ITS émettrice (par exemple des informations sur l'état d'un véhicule permettant de signaler sa présence même quand il n'est pas directement visible). Les messages de type DENM permettent de signaler l'occurrence d'un évènement anormal (par exemple signaler un accident de la route ou un phénomène météorologique exceptionnel et dangereux). Les messages de type CPM permettent de transmettre des informations relatives aux objets environnants détectés. Les messages MCM permettent d'échanger des informations sur les manoeuvres précises prévues par un véhicule usager ou gestionnaire. Les modes de réalisation de l'invention s'appliquent aussi à tout type de message futur relatif aux futurs standards des communications véhiculaires dans les systèmes de transport intelligents.

En référence à la figure 2, une station ITS 200 peut comprendre une pluralité de couches protocolaires interconnectées comprenant une couche applications 201, une couche 'facilities' 202, une couche réseau et transport 203, une couche technologies d'accès 204, une unité de gestion 205, et une unité de sécurité 206.

Selon certains modes de réalisation, la couche applications 201 peut être configurée pour contenir toutes les applications qui peuvent bénéficier des services mutualisés ou de communication des couches inférieures. Les applications peuvent être des applications de sécurité ou des applications non liées à la sécurité. Chaque application doit faire connaître ses besoins de communications en fournissant à l'unité de gestion 205 les caractéristiques de chacun des flux de données susceptibles d'être transmis par l'application.

Selon certains modes de réalisation, la couche 'facilities' 202 est une couche de services permettant aux applications de bénéficier de services mutualisés (ex. une messagerie normalisée pour la transmission, la réception et l'abonnement à des messages contenant des informations variées, une base de données, des services de marquage des datagrammes, des services de positionnement fiable). La couche facilities 202 peut en outre être configurée pour construire les différents types de messages dédiés aux applications et pour orienter les unités de données (ex. les datagrammes) vers la pile de communication la plus adaptée en fonction de la technologie de communication et des capacités de la station ITS 200.

Selon certains modes de réalisation, la couche réseau et transport 203 peut être configurée pour mettre en œuvre des protocoles spécifiques pour gérer les communications localisées (par exemple les échanges directs entre unité embarquée d'un véhicule et une unité de bord de route) et les communications distantes. Des exemples de protocoles implémentés au niveau de la couche facilities 202 comprennent, sans limitation, le protocole TCP, le protocole UDP, le protocole IP (en particulier IPv6), le protocole de routage GeoNet basé sur les coordonnées spatiales géographiques de la zone de destination pour l'acheminement des messages, et des protocoles de gestion de transfert de connectivité (handover en langue anglo-saxonne).

Selon certains modes de réalisation, la couche technologies d'accès 204 peut être configurée pour permettre la mise en œuvre de toutes les technologies d'accès existantes et à venir, filaires ou sans fil, pour l'usage interne et externe de la station ITS 200. Selon certains modes de réalisation, les technologies d'accès sans fil peuvent comprendre les technologies d'accès à courte portée et les technologies d'accès ad-hoc (ex. la norme WLAN 5 GHz, la norme 5.9 GHz ITS, la norme WiFi™), les technologies d'accès sans fil à haut débit (ex. WiMax) les réseaux cellulaires (ex. 2G, 3G, UMTS, 4G, la future génération 5G), les technologies numériques à large bande, l'infra-rouge, les réseaux satellites, les réseaux de capteurs, etc. En fonction de la technologie d'accès utilisée, la couche technologies d'accès 204 peut utiliser différents paramètres de transmission, par exemple, différents taux de transmission, différentes puissances d'émission, différentes bandes de fréquence, différents types/nombres d'antennes émettrices et/ou réceptrices, différents modes de transmission (ex. point-à-point, point-à-multipoint, diffusion, 'peer-to-peer', etc.).

Selon certains modes de réalisation, la couche de gestion 205 peut être configurée pour gérer les fonctionnalités internes de la station ITS 200 (notamment les fonctionnalités disponibles dans chaque couche protocolaire), pour déterminer les technologies d'accès disponibles, pour gérer les flux de données en fonction des besoins de communication des applications et/ou de leurs priorités, et pour gérer les fonctionnalités et les capacités de transmission de la station ITS 200.

Selon certains modes de réalisation, la couche de sécurité 206 peut être configurée pour fournir à toutes les couches protocolaires les mécanismes nécessaires à la sécurisation des communications (ex. chiffrement, authentification, etc.).

Les différentes applications exécutées dans la station ITS peuvent avoir des exigences différentes en termes de latence, de couverture géographique, et en général en termes de qualité de service. Les modes de réalisation de l'invention fournissent un dispositif 2020 pour la gestion efficace de la congestion multi-message et multi-application dans la station ITS 200. Le dispositif 2020 est implémenté dans la couche facilities 202.

La station ITS 200 peut être configurée pour exécuter au moins deux applications, chaque application s'exécutant dans la station ITS 200 délivrant un ou plusieurs messages, chaque message étant associé à un type de message, et les messages délivrés par l'ensemble des applications comprenant au moins deux messages de types différents. La station ITS 200 peut être accordée une possibilité de transmission de messages pendant un cycle de transmission courant (aussi référencée 'cycle courant') et peut être accordée une limite d'utilisation du canal pour le cycle de transmission courant. Plus précisément, la station ITS 200 peut être configurée à opérer selon un cycle de fonctionnement pour l'utilisation du canal en fonction de différentes caractéristiques, notamment standardisées, la station ITS 200 étant configurée pour écouter les conditions du canal selon un procédé standard et à avoir l'accès et la possibilité de transmission des données qu'à certaines occasions pendant un cycle de transmission courant.

Pour faciliter la compréhension des modes de réalisation décrits dans la suite de la description détaillée de l'invention, les définitions et notations suivantes sont fournies :

$A \geq 2$ représente le nombre (au moins égal à deux) des applications s'exécutant dans la station ITS 200 ;

- $App_a$ se réfère à la $a^{\text{ème}}$ application parmi les $A$ applications s'exécutant dans la station ITS 200 ($a = 1, ...,A$) ;

- $msg_m^{(a)}$ désigne un message de type de message m généré par l'application $App_a$;

- $M$ désigne le nombre total des types de messages m différents ($m = 1, ..., M$) ;

- $N$ désigne un ensemble de propriété relatives à une qualité de service cible ;

- $\left\{ p_1^{(am)}, p_2^{(am)}, ..., p_N^{(am)} \right\}$ désigne l'ensemble de valeurs d'indicateur de qualité de service associé au message $msg_m^{(a)}$ de type de message m généré par l'application $App_a$ ;

- $P\left( msg_m^{(a)} \right)$ désigne un coefficient de priorité associé au message $msg_m^{(a)}$ de type de message m généré par l'application $App_a$ ;

- $R_m(a)$ désigne un taux d'allocation de ressources associé au message $msg_m^{(a)}$ de type de message m généré par l'application $App_a$ ;

- $C_m(a)$ désigne une part de ressources canal associée au message $msg_m^{(a)}$ de type de message m généré par l'application $App_a$ ;

- *LUC* désigne la limite d'utilisation canal accordée à une station ITS pendant un cycle courant.

Les modes de réalisation de l'invention permettent la gestion et la régulation des flux de données générés par les différentes applications s'exécutant dans la station ITS 200 en fonction des exigences en qualité de service de chaque application. La gestion des priorités entre les différentes applications et les différents types de messages générés ou susceptibles d'être générés par chaque application est mise en œuvre selon les modes de réalisation de l'invention en se basant sur un mécanisme de gestion de priorités dynamiques dans lequel les priorités allouées aux différentes applications et aux différents types de messages tiennent compte des exigences en termes de qualité de service de chaque application.

En référence à la figure 2, le dispositif 2020 peut être caractérisé en ce qu'il comprend un calculateur de ressources 2021 configuré pour gérer l'allocation des ressources disponibles entre les différentes applications considérant des messages de types différents en accordant à chaque type de message une priorité qui dépend des exigences en termes de qualité de service de l'application générant ce message. Plus précisément, selon certains modes de réalisation, le calculateur de ressources 2021 peut être configuré pour :

- déterminer un ensemble de N propriétés relatives à une qualité de service cible pour le cycle courant, ces propriétés représentent les propriétés potentielles pouvant être considérées pour l'optimisation du partage des ressources disponibles entre les différentes applications s'exécutant dans la station ITS 200 ;

- recevoir, en association avec chaque application $App_a$ et chaque message $msg_m^{(a)}$ de type de message *m* et généré par l'application $App_a$, un ensemble de valeurs d'indicateurs de qualité de service cible $\left\{p_1^{(am)}, p_2^{(am)}, ..., p_N^{(am)}\right\}$, $n^{\text{ème}}$ valeur $p_n^{(am)}$ pour n = 1, ..., N représentant la $n^{\text{ème}}$ propriété de l'ensemble de N propriétés relatives à la qualité de service cible.

Les valeurs des indicateurs de qualité de service cible permettent à chaque application de spécifier, pour chaque type de message, les exigences ou les spécifications requises.

Selon certains modes de réalisation, chaque application $App_a$ pour a = 1, ..., A de l'au moins deux applications s'exécutant dans la station ITS 200 peut être configurée pour déterminer toutes les valeurs $p_n^{(am)}$ d'indicateurs de qualité de service cible pour n = 1, ..., N, c'est-à-dire pour l'ensemble N des propriétés relatives à une qualité de service cible.

Selon d'autres modes de réalisation, au moins une application $App_a$ (pour *a* variant entre 1 et *A*) parmi les deux ou plus applications s'exécutant dans la station ITS 200 peut être configurée pour déterminer une partie des valeurs de l'ensemble des valeurs d'indicateurs de qualité de service cible associé à au moins un type de message m ou à au moins un message $msg_m^{(a)}$ de type *m*, le calculateur de ressources 2021 étant configuré pour déterminer le reste des valeurs de l'ensemble de valeurs d'indicateurs de qualité de service cible de manière automatique.

Selon certains modes de réalisation, une propriété relative à la qualité de service cible peut être choisie dans un groupe comprenant, sans limitations, l'urgence, l'utilité, la portée (en mètres, liée au taux de pertes de paquets), la latence (en millisecondes, depuis l'interface émettrice jusqu'à la réception), la classe du trafic, le taux de perte de messages, le débit de données (en Mb/s), la vitesse maximale supportant l'application, la disponibilité, la taille des messages transmis, le nombre de messages transmis, la fiabilité en taux d'erreur acceptable, et l'âge de l'information.

La propriété 'classe du trafic' permet de différencier les différentes applications ayant des priorités différentes (ex. voix, vidéo, best effort, background). Selon certains modes de réalisation, la valeur d'indicateur de qualité de service représentant la propriété 'classe du trafic' peut prendre une valeur parmi les valeurs '1', '0.75', '0.5', et '0.25', la valeur '1' pouvant être associée à un message de priorité voix (le plus prioritaire), la valeur '0.75', pouvant être associée à un message de priorité vidéo, la valeur '0.5' pouvant être associée à un message de priorité 'best effort', et la valeur '0.25' pouvant être associée à un message de priorité 'background'.

La propriété 'utilité' fournit une indication sur l'importance d'un message et permet de différentier et de spécifier la priorité entre les messages ou les applications de même type de trafic. Par exemple, un message de type CAM et un message de type CPM peuvent appartenir à la même classe de trafic. Dans ce cas, la propriété utilité peut être utilisée pour déterminer quel message est plus important. Par exemple, un message de type CAM qui doit être communiqué à tous les véhicules à proximité peut être plus prioritaire qu'un message de type CPM qui peut ne pas être communiqué à toutes les entités à proximité. Dans un mode de réalisation, la valeur représentant la propriété utilité peut être égale à '1' si le message généré est à transmettre à toutes les stations ITS à proximité et la valeur représentant la propriété d'utilité peut être égale à '0.5' si le message généré est à transmettre à une partie (par exemple la moitié) des stations ITS à proximité.

La propriété 'urgence' peut indiquer le délai dans lequel une application s'exécutant dans la station ITS 200 doit transmettre l'information. La valeur représentant la propriété urgence peut être initialisée à la valeur '0' pour indiquer qu'une application donnée ne requiert pas de façon urgente la transmission d'un message. La valeur correspondante peut être modifiée pendant le cycle courant ou d'un cycle à un autre lorsque le délai de transmission du message approche à sa limite.

Selon certains modes de réalisation, le calculateur de ressources 2021 peut être configuré pour déterminer l'ensemble $N = N(t)$ de propriétés relatives à la qualité de service cible de façon dynamique et variable dans le temps en fonction du type d'au moins une application $App_a$ requérant la transmission d'au moins un message $msg_m^{(a)}$.

Les valeurs $p_n^{(am)}$ des indicateurs de qualité de service sont utilisées selon les modes de réalisation pour gérer les priorités d'accès aux ressources entre les différentes applications et pour les différents types de messages. A cet effet, le calculateur de ressources 2021 peut être configuré pour comparer, pour chaque type de message m, les ensembles de valeurs d'indicateurs de qualité de service

$$\left\{p_1^{(1m)}, p_2^{(1m)}, ..., p_N^{(1m)}\right\}, \left\{p_1^{(2m)}, p_2^{(2m)}, ..., p_N^{(2m)}\right\}, ..., \left\{p_1^{(Am)}, p_2^{(Am)}, ..., p_N^{(Am)}\right\}$$

associés à ce type de message pour toutes les applications $App_a$ pour $a = 1, ..., A$ s'exécutant dans la station ITS 200. La comparaison des tous les ensembles de valeurs d'indicateurs de qualité de service pour toutes les applications et tous les types de messages, permet avantageusement, de sélectionner, pour chaque type de message, l'application la plus prioritaire, et de sélectionner, pour toutes les applications, le type de message le plus prioritaire, et de gérer ainsi la priorité multi-application et multi-message. Le calculateur de ressources 2021 peut être ainsi configuré pour sélectionner, pour chaque type de message $m$, un ensemble de valeurs d'indicateurs de qualité de service $\left\{p_1^{(x_im)}, p_2^{(x_im)}, ..., p_N^{(x_im)}\right\}$ avec $x_i$ variant entre 1 et $A$ et variant pour chaque type de message (c'est-à-dire $x_i = x_i(m)$), selon un critère de sélection dépendant de spécifications de qualité de service.

Selon certains modes de réalisation, le critère de sélection peut consister en la sélection, pour chaque type de message et parmi les ensembles associés à toutes les applications s'exécutant dans la station ITS 200, de l'ensemble de valeurs d'indicateurs de qualité de service comprenant une valeur minimale ou une valeur maximale.

L'ensemble des valeurs $\left\{p_1^{(x_im)}, p_2^{(x_im)}, ..., p_N^{(x_im)}\right\}$ d'indicateurs de qualité de service cible sélectionné en association avec chaque type de message est considéré selon les modes de réalisation de l'invention pour caractériser de façon dynamique la priorité de chaque type de message provenant de toutes les applications. Le calculateur de ressources 2021 peut être configuré pour déterminer, en association avec chaque type de message m, un coefficient de priorité $P\left(msg_m^{(x_i)}\right)$ en fonction des valeurs de l'ensemble de valeurs $\left\{p_1^{(x_im)}, p_2^{(x_im)}, ..., p_N^{(x_im)}\right\}$ sélectionné pour ce type de message. Plus précisément, le calculateur de ressources 2021 peut être configuré pour déterminer, pour chaque type de message m allant de 1 à $M$, le coefficient de priorité $P\left(msg_m^{(x_i)}\right)$ comme étant la somme pondérée des valeurs $p_1^{(x_im)}, p_2^{(x_im)}, ..., p_N^{(x_im)}$ de l'ensemble des valeurs d'indicateurs de qualité de service sélectionné en association avec le type de message m selon l'équation suivante :

$$P\left(msg_m^{(x_i)}\right) = \sum_{n=1}^{N} \alpha_n p_n^{(x_im)} \qquad (1)$$

Dans l'équation (1), les coefficients $\alpha_n$ pour $n = 1, ..., N$ sont des coefficients prédéterminés définissant la somme pondérée.

Les coefficients de priorités déterminés par le calculateur de ressources pour chaque type de message peuvent être utilisés selon les modes de réalisation de l'invention pour déterminer un taux d'allocation de ressources pour chaque type de message. Plus précisément, le calculateur de ressources 2021 peut être configuré pour déterminer, pour chaque type de message $m$, un taux d'allocation de ressources $R_m(x_i)$ en fonction des coefficients de priorité $P\left(msg_m^{(x_i)}\right)$ associés à tous les types de messages $m = 1, ... , M$ tel que le taux d'allocation de ressources $R_m(x_i)$ est le rapport entre le coefficient de priorité associé au type de message $m$ et la somme des coefficients de priorité associés aux types de messages $k \neq m$ différents du type de message $m$ tel que :

$$R_m(x_i) = \left. P\left(msg_m^{(x_i)}\right) \middle/ \sum_{k \neq m} P\left(msg_k^{(x_l)}\right) \right. \qquad (2)$$

**Selon** certains modes de réalisation, le taux d'allocation de ressources déterminés pour chaque type de message peut être utilisé pour déterminer la part de ressources du canal pour chaque type de message et gérer l'allocation des ressources disponibles pendant le cycle courant entre les différentes applications tenant compte des types différents des messages à transmettre par chaque application. Le calculateur de ressources 2021 peut alors être configuré pour recevoir la limite d'utilisation canal *LUC* accordée à la station ITS 200 pendant le cycle courant et déterminer une part de ressources canal $C_m(x_i)$ en association avec chaque type de message $m = 1, ..., M$ en fonction du taux d'allocation de ressources associé au type de message et de la limite d'utilisation canal accordée à la station ITS 200. Plus précisément, le calculateur de ressources peut être configuré pour déterminer la part de ressources canal $C_m(x_i)$ associée au type de message $m$ en multipliant le taux d'allocation de ressources associé au type de message $m$ par la limite d'utilisation du canal accordée pendant le cycle courant à la station ITS 200 tel que :

$$C_m(x_i) = LUC \times R_m(x_i) \qquad (3)$$

Selon certains modes de réalisation, le calculateur de ressources 2021 peut être configuré pour recevoir la limite d'utilisation du canal accordée à la station ITS 200 pour le cycle courant par la couche technologies d'accès 204 configurée pour déterminer la limite d'utilisation du canal pour la station ITS 200 pour déterminer la part de temps accordée à la station ITS 200 pour transmettre ses paquets de données. Lorsque la station ITS 200 transmet un paquet dont le temps de transmission dépasse la limite accordée, la station ITS 200 peut être configurée pour s'abstenir de transmettre des données pendant une période de temps proportionnelle pour respecter le rapport donné par :

$$LUC = \left. T_{ON;station} \middle/ (T_{ON;station} + T_{OFF;station}) \right. \qquad (4)$$

Dans l'équation (4), $T_{ON;station}$ désigne le temps de transmission d'un paquet de données par la station ITS 200 et $T_{OFF;station}$ désigne le temps d'abstention à la transmission par la station ITS 200, c'est-à-dire le temps durant lequel la station ITS 200 ne transmet pas de données.

Dans certains modes de réalisation, la couche technologies d'accès 204 peut être configurée pour déterminer la limite d'utilisation du canal accordée à la station ITS 200 toutes les 100 millisecondes.

Selon certains modes de réalisation, le calculateur de ressources 2021 peut en outre être configuré pour déterminer pour chaque application s'exécutant dans la station ITS 200 un stock de ressources $S_{App_a}$ pour le cycle courant en fonction de son historique d'utilisation des ressources du canal. Le calculateur de ressources 2021 peut être configuré pour déterminer le stock de ressources pour chaque application à l'instant $t$ comme étant la somme des ressources existantes associées à chaque application à l'instant t et des ressources allouées, auxquelles sont soustraites les ressources utilisées pour transmettre des données.

Selon certains modes de réalisation, une application $App_a$ qui a généré et transmis un paquet de taille $T_{ON;App_a}$ doit s'abstenir de toute transmission pendant une période de temps $T_{OFF;App_a}$. Les ressources canal allouées à l'application $App_a$ dépendent de la période de temps d'attente ou d'abstention de l'application. Si l'application $App_a$ a eu une période d'attente de $T_{OFF;App_a}$, alors les ressources allouées à l'application $App_a$ doivent être suffisantes pour permettre la transmission d'un nouveau paquet de taille $T_{ON;App_a}$. Les ressources allouées sont déterminées comme étant le rapport entre les ressources allouées lors du cycle précédent et la somme du temps d'abstention de transmission $T_{OFF;App_a}$ et la taille du paquet transmis $T_{ON;App_a}$.

Selon certains modes de réalisation, le calculateur de ressources 2021 peut être configuré pour transmettre les stocks de ressources déterminés pour chaque application à un ordonnanceur 2023 configuré pour autoriser l'accès au canal à l'application ayant le stock de ressources le plus élevé. L'ordonnanceur 2023 peut alors être configuré pour requérir la génération et la transmission de message à l'application ayant le plus grand stock de ressources, ce qui permet avantageusement de réguler la génération et la transmission de messages au niveau de la couche applications 201 par les différentes applications selon les ressources allouées aux différentes applications et aux différents types de messages sur la base de coefficients de priorité qui tiennent compte des exigences en termes de qualité de service. Si l'application ayant le plus grand stock de ressources a un message à transmettre, cette application a l'autorisation de générer et de transmettre son message. Sinon, l'ordonnanceur 2023 requiert la transmission de message à l'application ayant un message à transmettre et ayant le suivant plus grand stock de ressources.

Après la transmission de message par l'application ayant le plus grand stock de ressources parmi les applications ayant requis la transmission d'un message, le calculateur de ressources 2021 peut être configuré pour mettre à jour le stock de ressources associé à l'application ayant transmis un message. Plus précisément, le calculateur de ressources 2021 peut être configuré à déterminer un stock de ressources à jour selon l'équation suivante :

$$S_{App_a} = E_{App_a} - \frac{T_{ON;App_a}}{T_{OFF;App_a}} \times \frac{(1 - C_m(x_i))}{C_m(x_i)} \qquad (5)$$

Dans l'équation (5), $E_{App_a}$ désigne les ressources allouées à l'application $App_a$ pendant le cycle de transmission courant et $C_m(a)$ désigne la part de ressources canal associée au message $msg_m^{(a)}$ de type $m$ généré et transmis par l'application $App_a$.

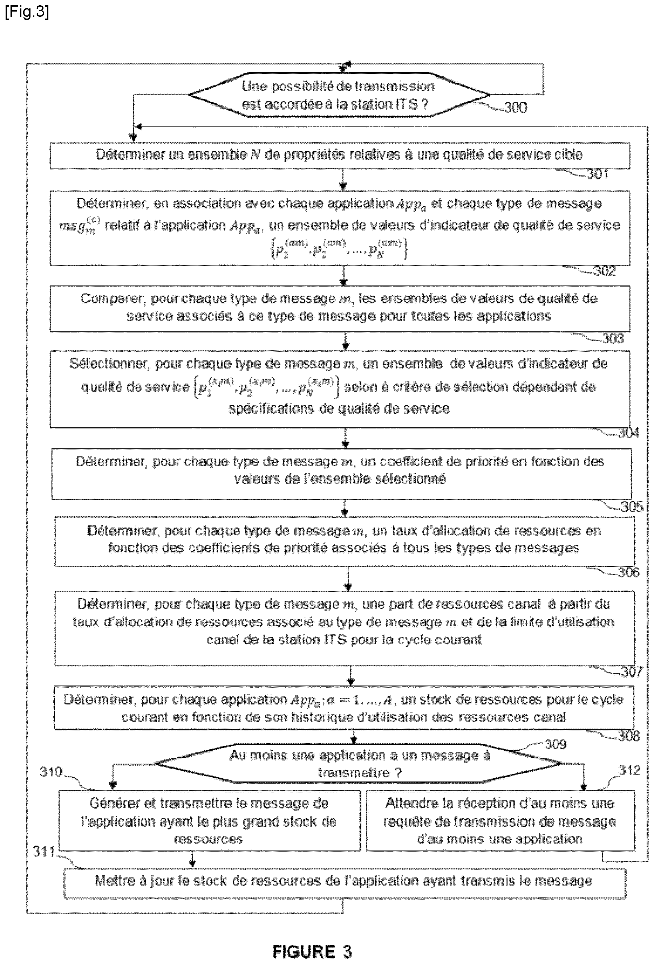

En référence à la figure 3, les modes de réalisation de l'invention fournissent en outre un procédé pour le contrôle de congestion de canal multi-message et multi-application dans une station ITS configurée pour exécuter au moins deux applications, chaque application délivrant un ou plusieurs messages, chaque message étant associé à un type de message donné, les messages délivrés par l'au moins deux applications comprenant au moins deux messages de types différents. Le contrôle de congestion et la gestion de l'allocation des ressources disponibles entre les différentes applications considérant des messages de types différents se base selon le procédé sur l'allocation à chaque type de message une priorité qui dépend des exigences en termes de qualité de service de l'application générant ce message.

A l'étape 300, il peut être déterminé si une possibilité de transmission est accordée à la station ITS pour le cycle courant.

S'il est déterminé à l'étape 300 qu'une possibilité de transmission est accordée à la station ITS pour le cycle courant, un ensemble $N$ de propriétés relatives à une qualité de service cible peut être déterminé à l'étape 301. Les propriétés permettent de représenter des spécifications en termes de qualité de service cible et d'optimiser le partage des ressources disponibles entre les différentes applications s'exécutant dans la station ITS.

A l'étape 302, un ensemble de valeurs d'indicateurs de qualité de service cible $\left\{ p_1^{(am)}, p_2^{(am)}, \ldots, p_N^{(am)} \right\}$ peut être déterminé en association avec chaque application $App_a$ et chaque message $msg_m^{(a)}$ de type de message $m$ généré par l'application $App_a$, la $n^{\text{ème}}$ valeur $p_n^{(am)}$ pour $n = 1, \ldots, N$ représentant la $n^{\text{ème}}$ propriété de l'ensemble de $N$ propriétés relatives à la qualité de service cible. Les valeurs des indicateurs de qualité de service cible permettent à chaque application de spécifier, pour chaque type de message, les exigences ou les spécifications requises.

Selon certains modes de réalisation, la détermination de l'ensemble de valeurs d'indicateurs de qualité de service cible associé à chaque type de message peut être effectuée par chaque application.

Selon d'autres modes de réalisation, la détermination d'au moins une partie de l'ensemble de valeurs d'indicateurs de qualité de service cible peut être effectuée par chaque application, la détermination du reste de l'ensemble de valeurs d'indicateurs de qualité de service cible étant effectuée de façon automatique.

Selon certains modes de réalisation, une propriété relative à la qualité de service cible peut être choisie dans un groupe comprenant, sans limitations, l'urgence, l'utilité, la portée (en mètres, liée au taux de pertes de paquets), la latence (en millisecondes, depuis l'interface émettrice jusqu'à la réception), la classe du trafic, le taux de perte de messages, le débit de données (en Mb/s), la vitesse maximale supportant l'application, la disponibilité, la taille des messages transmis, le nombre de messages transmis, la fiabilité en taux d'erreur acceptable, et l'âge de l'information.

Selon certains modes de réalisation, l'ensemble $N = N(t)$ de propriétés relatives à la qualité de service cible peut être déterminé de façon dynamique et variable dans le temps en fonction du type d'au moins une application $App_a$ requérant la transmission d'au moins un message $msg_m^{(a)}$.

A l'étape 303, les ensembles de valeurs d'indicateurs de qualité de service $\left\{p_1^{(1m)}, p_2^{(1m)}, ..., p_N^{(1m)}\right\}, \left\{p_1^{(2m)}, p_2^{(2m)}, ..., p_N^{(2m)}\right\}, ..., \left\{p_1^{(Am)}, p_2^{(Am)}, ..., p_N^{(Am)}\right\}$ associés à chaque type de message peuvent être comparés pour toutes les applications $App_a$ pour $a = 1, ..., A$ s'exécutant dans la station ITS. La comparaison des tous les ensembles de valeurs d'indicateurs de qualité de service pour toutes les applications et tous les types de messages, permet avantageusement, de sélectionner, pour chaque type de message, l'application la plus prioritaire, et de sélectionner, pour toutes les applications, le type de message le plus prioritaire, et de gérer ainsi la priorité multi-application et multi-message.

A l'étape 304, un ensemble de valeurs d'indicateurs de qualité de service $\left\{p_1^{(x_im)}, p_2^{(x_im)}, ..., p_N^{(x_im)}\right\}$ peut être sélectionné pour chaque type de message $m$ selon un critère de sélection dépendant de spécifications de qualité de service. Selon certains modes de réalisation, le critère de sélection peut consister en la sélection, pour chaque type de message et parmi les ensembles associés à toutes les applications s'exécutant dans la station ITS, de l'ensemble de valeurs d'indicateurs de qualité de service comprenant une valeur minimale ou une valeur maximale.

A l'étape 305, un coefficient de priorité $P\left(msg_m^{(x_i)}\right)$ peut être déterminé pour chaque type de message men fonction des valeurs de l'ensemble de valeurs $\left\{p_1^{(x_im)}, p_2^{(x_im)}, ..., p_N^{(x_im)}\right\}$ d'indicateurs de qualité de service cible sélectionné à l'étape 304 pour chaque type de message. Dans un mode de réalisation le coefficient de priorité déterminé pour chaque type de message peut être déterminé à l'étape 305 comme étant la somme pondérée des valeurs $p_1^{(x_im)}, p_2^{(x_im)}, ..., p_N^{(x_im)}$ de l'ensemble des valeurs d'indicateurs de qualité de service sélectionné en association avec le type de message $m$ selon l'équation (1).

A l'étape 306, un taux d'allocation de ressources $R_m(x_i)$ peut être déterminé poru chaque type de message m en fonction des coefficients de priorité $P\left(msg_m^{(x_i)}\right)$ associés à tous les types de messages $m = 1, ..., M$ tel que le taux d'allocation de ressources $R_m(x_i)$ est donné par le rapport entre le coefficient de priorité associé au type de message $m$ et la somme des coefficients de priorité associés aux types de messages $k \neq m$ différents du type de message $m$ selon l'équation (2).

A l'étape 307, une part de ressources canal $C_m(x_i)$ peut être déterminée en association avec chaque type de message $m = 1, ..., M$ en fonction du taux d'allocation de ressources $R_m(x_i)$ associé à chaque type de message et de la limite d'utilisation canal $LUC$ accordée à la station ITS pendant le cycle courant selon l'équation (3).

A l'étape 308, un stock de ressources peut être déterminé pour chaque application s'exécutant dans la station ITS pour le cycle courant en fonction de son historique d'utilisation des ressources canal. Plus précisément, un stock de ressources peut être déterminé à l'étape 308 pour chaque application à l'instant $t$ comme étant la somme des ressources existantes associées à chaque application à l'instant $t$ et des ressources allouées, auxquelles sont soustraites les ressources utilisées pour transmettre des données.

A l'étape 309, il peut être déterminé si au moins une application parmi les deux ou plus applications s'exécutant dans la station ITS a un message à transmettre. S'il est déterminé à l'étape 309 qu'aucune application ne requiert la transmission d'un message, l'attente de la réception d'au moins une requête de transmission de message d'au moins une application peut être enclenchée à l'étape 312 jusqu'à ce qu'au moins une application s'exécutant dans la station ITS requiert la transmission d'au moins un message.

S'il est déterminé à l'étape 309 qu'une ou plusieurs applications requièrent la transmission d'au moins un message, un message de l'application ayant le plus grand stock de ressources peut être généré et transmis à l'étape 310 et le stock de ressources de l'application ayant généré et transmis un message peut être mis à jour à l'étape 310 selon l'équation (5).

Les modes de réalisation de l'invention ont été évalués par des simulations pour démontrer les avantages et les gains offerts par les techniques de gestion de la congestion canal fournis par l'invention par rapport aux techniques existantes comprenant les techniques de contrôle de congestion distribué (labélisé 'Distributed Congestion Control' ou DCC) et les techniques d'allocation de priorités statiques EDCA. Les simulations ont été réalisées considérant un scénario de transport dans une autoroute de banlieue à 4 voies sur 4 voies avec des stations ITS embarquées dans des véhicules ayant des vitesses entre 70 et 90 km/h, pour différents niveaux de densité du trafic. Chaque véhicule exécute trois applications de sécurité, diffusant des paquets sur le même canal de transmission, les paquets consistant à des messages de type CAM de taille 300 Octets, des messages de type DENM de taille 400 Octets, et des messages de type CPM de taille 650 Octets. Les paquets de type CAM sont générés en utilisant les conditions de déclenchement indiquées dans la norme ETSI EN 302 637-2. Les messages de type CPM sont émis à une fréquence aléatoire uniformément répartie entre une fréquence minimale et une fréquence maximale de 1 à 5 Hz, comme indiqué dans la norme ETSI TS 103 324. Enfin, environ 10% des véhicules émettent une seule rafale de 100 messages de type DENM, à une fréquence de 10Hz. Les performances sont évaluées en termes de délai de file d'attente DCC et de débit de transmission requis par rapport au débit de transmission autorisé pour chaque application. Les résultats sont une moyenne de 50 simulations.

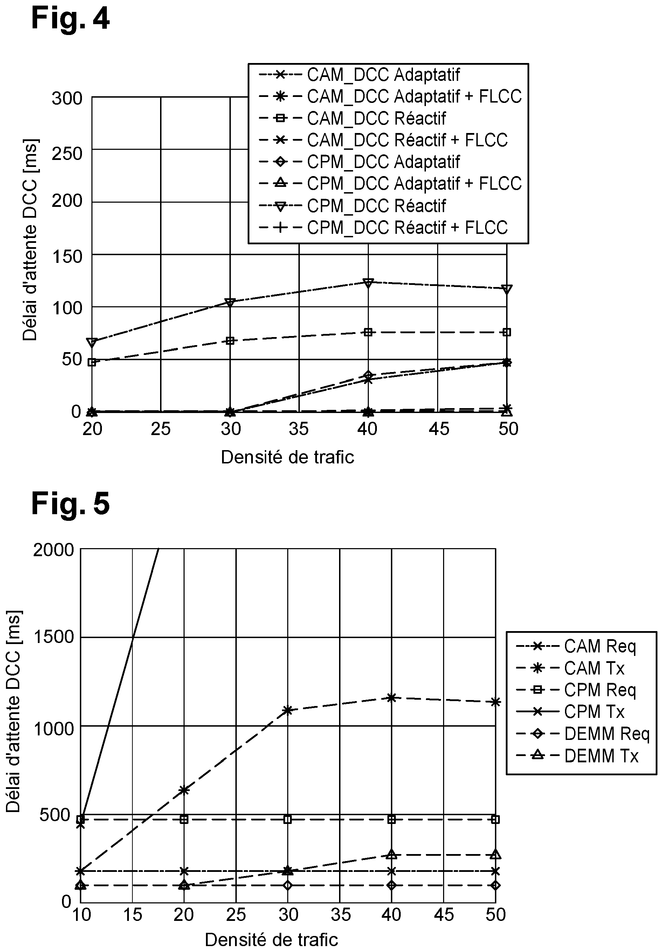

La figure 4 représente des diagrammes évaluant le délai d'attente d'accès DCC ('DCC Access Layer Queue Delay' en langue anglo-saxonne) pour différents niveaux de densité de trafic ('Node density' en langue anglo-saxonne), pour les paquets de types CAM et CPM utilisant les techniques de contrôle de congestion distribué ('DCC Access'), les techniques de contrôle du débit à la couche facilities ('Facilities Layer Rate Control' en langue anglo-saxonne). Les résultats de simulations montrent que sans le contrôle de congestion à la couche facilities, le mécanisme de déclenchement des paquets vérifie les conditions de déclenchement et le niveau de congestion indiqués par des paramètres tels que les paramètres T_GenCam_DCC ou T_GenCpm_DCC. Les valeurs T_GenCam_DCC et T_GenCpm_DCC régulent la génération de paquets de chaque application, sans coordination entre elles ou avec le gardien d'accès ('Access Gate Keeper' en langue anglo-saxonne) de l'algorithme de contrôle de congestion décentralisé DCC, le gardien d'accès étant le gardien de l'ouverture du flux de communication vers la couche d'accès physique. Ainsi, l'application génère un paquet lorsque le portail est fermé, qui est mis en file d'attente dans les files d'attente DCC. Comme illustré à la Figure 4, pour les densités élevées de noeuds, les messages de type CAM sont retardés de 80ms, les messages de type CPM sont retardés de 120ms pour le DCC réactif, et les deux paquets pour le DCC adaptatif sont retardés de 50ms. Cependant, lorsque la couche facilities coordonne la génération des paquets en coopération avec le DCC de la couche d'accès, il n'y a pas de délai d'attente, que ce soit pour le DCC adaptatif ou réactif. Ceci montre la nécessité d'un planificateur de couche d'accès, au lieu que chaque application règle elle-même la génération de paquets sur le DCC de la couche d'accès.

Les figures 5 à 7 illustrent des diagrammes des performances évaluées en termes de temps inter-transmission ('Inter Transmit Time' en langue anglo-saxonne) requis par chaque service en fonction de la densité des noeuds. Trois types de messages sont considérés, à savoir, les messages de types CAM, CPM, et DENM. Trois priorités EDCA sont considérées, à savoir, la priorité 'vidéo', la priorité 'best effort' et la priorité 'background'. Les performances obtenues en utilisant les priorités statiques EDCA sont comparées à celles obtenues par les modes de réalisation de l'invention se basant sur des coefficients de priorité multi-facteurs considérant $N$ = 3 propriétés relatives à la qualité de service cible comprenant une propriété d'urgence, une propriété d'utilité, et une propriété de latence.

La figure 5 représente des diagrammes évaluant le temps inter-transmission demandé par chaque service et autorisé par la couche facilities en utilisant la priorité statique EDCA. En moyenne, les messages DENM requièrent un ITT de 100ms, les messages CAM requièrent un ITT de 200ms, et les messages CPM requièrent environ un ITT de 500ms. Cependant, lorsque la densité des noeuds ou la charge des canaux augmente, l'ITT augmente. Au-delà d'une charge du canal de transmission de 70%, l'ITT requis pour les messages CPM dépasse 3 secondes, l'ITT requis pour les CAMs dépasse de 1 seconde, tout en allouant des ITT de 150 à 250 ms aux messages DENMs. L'ordre de priorité statique de l'EDCA est fixe et ne peut pas être contrôlé par l'ordonnanceur, ce qui a pour effet de dégrader fortement la performance des applications moins prioritaires. En utilisant l'ordonnancement selon les modes de réalisation de l'invention, l'ordonnanceur a beaucoup plus de flexibilité pour répartir les ressources entre les différentes applications et les différents services.

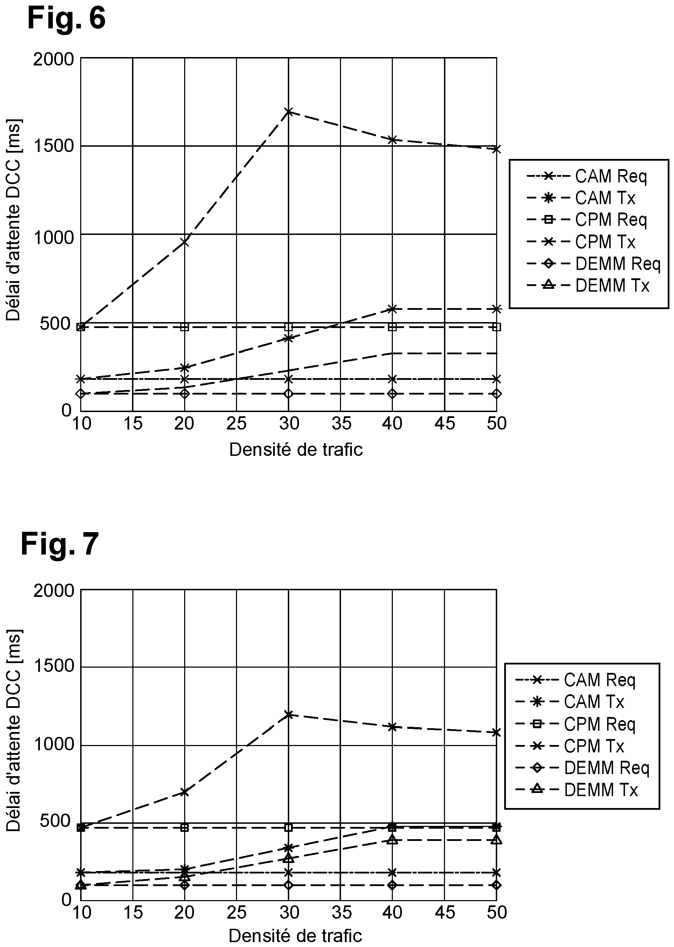

La Figure 6 représente des diagrammes évaluant l'ITT en fonction de la densité des nœuds lorsque chaque service DENM, CAM et CPM reçoit une priorité de 50%, 27% et 23% en utilisant les valeurs de priorité en fonction de leur classe de trafic, de l'utilité et de l'urgence selon certains modes de réalisation de l'invention. Les résultats numériques prouvent que les performances de l'ITT du CPM est bien meilleure que celle de l'EDCA statique. Cependant, cela coûte jusqu'à 150 ms de dégradation des performances du DENM à une charge de canal plus élevée, par rapport à l'EDCA statique. Par conséquent, le rendement du DENM est insuffisant pour répondre à ses exigences en matière de sécurité. Par conséquent, les valeurs des indicateurs de qualité de service peuvent être mises à jour (réduites dans ce cas) pour les messages CAM et du CPM pour donner une part de ressources plus élevée au message DENM.

La figure 7 représente des diagrammes évaluant l'ITT en fonction de la densité des nœuds lorsque 60% des ressources sont allouées aux messages DENM, alors que le CAM et le CPM ont une part réduite de 25% et 15% respectivement. Les résultats numériques prouvent la souplesse et la flexibilité de la solution proposée selon les différents modes de réalisation de l'invention, qui permet de caractériser dynamiquement chaque application au lieu d'utiliser la classe de trafic statique EDCA et d'affamer les applications moins prioritaires.

L'invention n'est pas limitée aux modes de réalisation décrits ci-avant à titre d'exemple non limitatif. Elle englobe toutes les variantes de réalisation qui pourront être envisagées par l'homme du métier.

En général les routines exécutées pour mettre en œuvre les modes de réalisation de l'invention, qu'elles soient mises en œuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

**Revendications**

1. Procédé pour la transmission de messages, dans un canal physique ou radio-fréquentiel, par au moins deux applications s'exécutant dans une station ITS, lesdits messages comprenant au moins deux messages de types différents, le procédé étant **caractérisé en ce qu'**il comprend les étapes consistant à :

   - déterminer (301) un ensemble de propriété relatives à une qualité de service cible ;
   - déterminer (302) en association avec chaque application et chaque type de message, un ensemble de valeurs d'indicateurs de qualité de service, chaque valeur de qualité de service représentant une propriété relative à ladite qualité de service cible ;
   - sélectionner (304), pour chaque type de message, un ensemble de valeurs d'indicateurs de qualité de service selon un critère de sélection dépendant de spécifications de qualité de service ;
   - déterminer (305), pour chaque type de message, un coefficient de priorité en fonction des valeurs de l'ensemble de valeurs de qualité de service sélectionné ;
   - déterminer (306), pour chaque type de message, un taux d'allocation de ressources en fonction des coefficients de priorité associés à tous les types de messages ;
   - déterminer (307), pour chaque type de message, une part de ressources du canal en fonction dudit taux d'allocation de ressources et d'une limite d'utilisation du canal ;
   - déterminer (308), pour chaque application, un stock de ressources pour un cycle de transmission courant;
   - générer et transmettre (310) le message de l'application ayant le plus grand stock de ressources.

2. Procédé selon la revendication 1, **caractérisé en ce que** la détermination de l'ensemble de valeurs d'indicateurs de qualité de service associé à chaque type de message est effectuée par chacune desdites au moins deux applications.

3. Procédé selon la revendication 1, **caractérisé en ce que** la détermination d'au moins une partie de l'ensemble de valeurs d'indicateurs de qualité de service cible associé à au moins un type de message est effectuée de façon automatique.

4. Procédé selon l'une quelconque des revendications précédentes, **caractérisé en ce qu'**une propriété relative à la qualité de service cible est choisie dans un groupe comprenant l'urgence, l'utilité, la portée, la latence, la classe du trafic, le taux de perte de messages, le débit de données, la vitesse maximale supportant l'application, la disponibilité, la taille des messages transmis, le nombre de messages transmis, la fiabilité en taux d'erreurs acceptable, et l'âge de l'information.

5. Procédé selon la revendication 1, **caractérisé en ce que** ledit ensemble de propriétés relatives à une qualité de service cible est déterminé de façon dynamique et variable dans le temps en fonction du type d'au moins une application requérant la transmission d'au moins un message.

6. Procédé selon l'une quelconque des revendications précédentes, **caractérisé en ce que** la part de ressources du canal est déterminée pour chaque type de message de façon dynamique dépendamment d'un ou plusieurs paramètres comprenant le niveau de congestion et l'information reçue par au moins une desdites au moins deux applications.

7. Procédé selon l'une quelconque des revendications précédentes, **caractérisé en ce que** le stock de ressources de l'application ayant transmis un message est mis à jour, un stock de ressources modifié en association avec ladite application étant déterminé en fonction du stock de ressources associé à ladite application au cycle de transmission courant et de la taille du message généré et transmis par ladite application.

8. Procédé selon la revendication 1, **caractérisé en ce que** le coefficient de priorité associé à un type de message est déterminé comme étant la somme pondérée des valeurs de l'ensemble de valeurs d'indicateurs de qualité de service sélectionné pour ce type de message, la somme pondérée étant définie par un ensemble de coefficients prédéterminés.

9. Dispositif (2020) pour la transmission de messages, dans un canal physique ou radio-fréquentiel, par au moins deux applications s'exécutant dans une station ITS (200), lesdits messages comprenant au moins deux messages de types différents, le dispositif (2020) étant **caractérisé en ce qu'**il comprend un calculateur de ressources (2021) configuré pour :

- déterminer un ensemble de propriété relatives à une qualité de service cible ;
- recevoir, en association avec chaque application et chaque type de message, un ensemble de valeurs d'indicateurs de qualité de service, chaque valeur de qualité de service représentant une propriété relative à la qualité de service cible ;
- sélectionner, pour chaque type de message, un ensemble de valeurs d'indicateurs de qualité de service selon un critère de sélection dépendant de spécifications de qualité de service ;
- déterminer, pour chaque type de message, un coefficient de priorité en fonction des valeurs de l'ensemble de valeurs de qualité de service sélectionné;
- déterminer, pour chaque type de message, un taux d'allocation de ressources en fonction des coefficients de priorité associés à tous les types de messages ;
- déterminer, pour chaque type de message, une part de ressources du canal en fonction dudit taux d'allocation et d'une limite d'utilisation du canal ;
- déterminer, pour chaque application, un stock de ressources pour un cycle de transmission courant; l'application ayant le plus grand stock de ressources étant configurée pour transmettre au moins un message.

## Patentansprüche

1. Verfahren zur Übertragung von Nachrichten in einem physischen oder einem Funkkanal durch mindestens zwei Anwendungen, die in einer ITS-Station ausgeführt werden, wobei die Nachrichten mindestens zwei Nachrichten unterschiedlichen Typs beinhalten, wobei das Verfahren **dadurch gekennzeichnet ist, dass** es die Schritte beinhaltet, die aus Folgendem bestehen:

- Bestimmen (301) eines Satzes von Eigenschaften in Bezug auf eine Solldienstgüte;
- Bestimmen (302), in Assoziation mit jeder Anwendung und jedem Nachrichtentyp, eines Satzes von Werten von Dienstgüteindikatoren, wobei jeder Dienstgütewert eine Eigenschaft in Bezug auf die Solldienstgüte darstellt;
- Auswählen (304), für jeden Nachrichtentyp, eines Satzes von Werten von Dienstgüteindikatoren gemäß einem Auswahlkriterium, das von Dienstgütespezifikationen abhängt;
- Bestimmen (305), für jeden Nachrichtentyp, eines Prioritätskoeffizienten in Abhängigkeit von den Werten des ausgewählten Satzes von Dienstgütewerten;
- Bestimmen (306), für jeden Nachrichtentyp, einer Ressourcenzuweisungsrate in Abhängigkeit von den Prioritätskoeffizienten, die mit allen Nachrichtentypen assoziiert sind;
- Bestimmen (307), für jeden Nachrichtentyp, eines Ressourcenanteils des Kanals in Abhängigkeit von der Ressourcenzuweisungsrate und einem Nutzungslimit des Kanals;
- Bestimmen (308), für jede Anwendung, eines Ressourcenbestandes für einen aktuellen Übertragungszyklus;
- Erzeugen und Übertragen (310) der Nachricht der Anwendung, die den größten Ressourcenbestand aufweist.

2. Verfahren nach Anspruch 1, **dadurch gekennzeichnet, dass** das Bestimmen des Satzes von Werten von Dienstgüteindikatoren, der mit jedem Nachrichtentyp assoziiert ist, durch jede der mindestens zwei Anwendungen durchgeführt wird.

3. Verfahren nach Anspruch 1, **dadurch gekennzeichnet, dass** das Bestimmen mindestens eines Teils des Satzes von Werten von Solldienstgüteindikatoren, der mit mindestens einem Nachrichtentyp assoziiert ist, automatisch durchgeführt wird.

4. Verfahren nach einem der vorhergehenden Ansprüche, **dadurch gekennzeichnet, dass** eine Eigenschaft in Bezug auf die Solldienstgüte aus einer Gruppe ausgewählt wird, die Dringlichkeit, Nützlichkeit, Reichweite, Latenz, Klasse des Verkehrs, Nachrichtenverlustrate, Datenrate, maximale Geschwindigkeit für die Anwendung, Verfügbarkeit, Größe der übertragenen Nachrichten, Anzahl der übertragenen Nachrichten, Zuverlässigkeit in puncto akzeptable Fehlerrate und Alter der Information beinhaltet.

5.  Verfahren nach Anspruch 1, **dadurch gekennzeichnet, dass** der Satz von Eigenschaften in Bezug auf eine Solldienstgüte dynamisch und zeitveränderlich in Abhängigkeit von dem Typ mindestens einer Anwendung, die die Übertragung mindestens einer Nachricht anfordert, bestimmt wird.

6.  Verfahren nach einem der vorhergehenden Ansprüche, **dadurch gekennzeichnet, dass** der Ressourcenanteil des Kanals für jeden Nachrichtentyp dynamisch in Abhängigkeit von einem oder mehreren Parametern bestimmt wird, welche den Überlastungsgrad und die durch mindestens eine der mindestens zwei Anwendungen empfangene Information beinhalten.

7.  Verfahren nach einem der vorhergehenden Ansprüche, **dadurch gekennzeichnet, dass** der Ressourcenbestand der Anwendung, die eine Nachricht übertragen hat, aktualisiert wird, wobei ein modifizierter Ressourcenbestand in Assoziation mit der Anwendung in Abhängigkeit von dem während des aktuellen Übertragungszyklus mit der Anwendung assoziierten Ressourcenbestand und der Größe der durch die Anwendung erzeugten und übertragenen Nachricht bestimmt wird.

8.  Verfahren nach Anspruch 1, **dadurch gekennzeichnet, dass** der mit einem Nachrichtentyp assoziierte Prioritätskoeffizient als die gewichtete Summe der Werte des für diesen Nachrichtentyp ausgewählten Satzes von Werten von Dienstgüteindikatoren bestimmt wird, wobei die gewichtete Summe durch einen Satz vorbestimmter Koeffizienten definiert wird.

9.  Vorrichtung (2020) zur Übertragung von Nachrichten in einem physischen oder einem Funkkanal durch mindestens zwei Anwendungen, die in einer ITS-Station (200) ausgeführt werden, wobei die Nachrichten mindestens zwei Nachrichten unterschiedlichen Typs beinhalten, wobei die Vorrichtung (2020) **dadurch gekennzeichnet ist, dass** sie einen Ressourcenkalkulator (2021) beinhaltet, der zu Folgendem konfiguriert ist:

    - Bestimmen eines Satzes von Eigenschaften in Bezug auf eine Solldienstgüte;
    - Empfangen, in Assoziation mit jeder Anwendung und jedem Nachrichtentyp, eines Satz von Werten von Dienstgüteindikatoren, wobei jeder Dienstgütewert eine Eigenschaft in Bezug auf die Solldienstgüte darstellt;
    - Auswählen, für jeden Nachrichtentyp, eines Satzes von Werten von Dienstgüteindikatoren gemäß einem Auswahlkriterium, das von Dienstgütespezifikationen abhängt;
    - Bestimmen, für jeden Nachrichtentyp, eines Prioritätskoeffizienten in Abhängigkeit von den Werten des ausgewählten Satzes von Dienstgütewerten;
    - Bestimmen, für jeden Nachrichtentyp, einer Ressourcenzuweisungsrate in Abhängigkeit von den Prioritätskoeffizienten, die mit allen Nachrichtentypen assoziiert sind;
    - Bestimmen, für jeden Nachrichtentyp, eines Ressourcenanteils des Kanals in Abhängigkeit von der Zuweisungsrate und einem Nutzungslimit des Kanals;
    - Bestimmen, für jede Anwendung, eines Ressourcenbestandes für einen aktuellen Übertragungszyklus; wobei die Anwendung, die den größten Ressourcenbestand aufweist, dazu konfiguriert ist, mindestens eine Nachricht zu übertragen.

**Claims**

1.  Method for transmitting messages, in a physical or radiofrequency channel, by means of at least two applications executed in an ITS station, said messages comprising at least two messages of different types, the method being **characterized in that** it comprises the steps of:

    - determining (301) a set of properties relating to a target quality of service;
    - determining (302), in association with each application and each message type, a set of quality of service indicator values, each quality of service value representing a property relating to said target quality of service;
    - selecting (304), for each message type, a set of quality of service indicator values according to a selection criterion dependent on quality of service specifications;
    - determining (305), for each message type, a priority coefficient according to the values of the selected set of quality of service values;
- determining (306), for each message type, a resource allocation rate according to the priority coefficients associated with all of the message types;
- determining (307), for each message type, a share of channel resources according to said resource allocation rate and a usage limit for the channel;
- determining (308), for each application, a stock of resources for a current transmission cycle;
- generating and transmitting (310) the message of the application having the largest stock of resources.

2.  Method according to Claim 1, **characterized in that** the set of quality of service indicator values associated with each message type is determined by each of said at least two applications.

3.  Method according to Claim 1, **characterized in that** at least part of the set of target quality of service indicator values associated with at least one message type is determined automatically.

4.  Method according to any one of the preceding claims, **characterized in that** a property relating to the target quality of service is chosen from a group comprising urgency, utility, range, latency, traffic class, message loss rate, data rate, maximum speed supporting the application, availability, size of messages transmitted, number of messages transmitted, reliability in terms of acceptable error rate, and age of the information.

5.  Method according to Claim 1, **characterized in that** said set of properties relating to a target quality of service is determined dynamically and variably over time as a function of the type of at least one application requiring the transmission of at least one message.

6.  Method according to any one of the preceding claims, **characterized in that** the share of channel resources is determined for each message type dynamically depending on one or more parameters comprising the level of congestion and the information received by at least one of said at least two applications.

7.  Method according to any one of the preceding claims, **characterized in that** the stock of resources of the application that has transmitted a message is updated, a stock of resources modified in association with said application being determined according to the stock of resources associated with said application in the current transmission cycle and the size of the message generated and transmitted by said application.

8.  Method according to Claim 1, **characterized in that** the priority coefficient associated with a message type is determined as the weighted sum of the values of the set of quality of service indicator values selected for this message type, the weighted sum being defined by a set of predetermined coefficients.

9.  Device (2020) for transmitting messages, in a physical or radiofrequency channel, by means of at least two applications executed in an ITS station (200), said messages comprising at least two messages of different types, the device (2020) being **characterized in that** it comprises a resource calculator (2021) configured for:

    - determining a set of properties relating to a target quality of service;
    - receiving, in association with each application and each message type, a set of quality of service indicator values, each quality of service value representing a property relating to the target quality of service;
    - selecting, for each message type, a set of quality of service indicator values according to a selection criterion dependent on quality of service specifications;
    - determining, for each message type, a priority coefficient according to the values of the selected set of quality of service values;
    - determining, for each message type, a resource allocation rate according to the priority coefficients associated with all of the message types;
    - determining, for each message type, a share of channel resources according to said allocation rate and a usage limit for the channel;
    - determining, for each application, a stock of resources for a current transmission cycle; the application having the largest stock of resources being configured to transmit at least one message.

[Fig.1]

**FIGURE 1**

[Fig.2]

**FIGURE 2**

[Fig.3]

Une possibilité de transmission est accordée à la station ITS ? — 300

Déterminer un ensemble $N$ de propriétés relatives à une qualité de service cible — 301

Déterminer, en association avec chaque application $App_a$ et chaque type de message $msg_m^{(a)}$ relatif à l'application $App_a$, un ensemble de valeurs d'indicateur de qualité de service $\left\{p_1^{(am)}, p_2^{(am)}, ..., p_N^{(am)}\right\}$ — 302

Comparer, pour chaque type de message $m$, les ensembles de valeurs de qualité de service associés à ce type de message pour toutes les applications — 303

Sélectionner, pour chaque type de message $m$, un ensemble de valeurs d'indicateur de qualité de service $\left\{p_1^{(x_i m)}, p_2^{(x_i m)}, ..., p_N^{(x_i m)}\right\}$ selon à critère de sélection dépendant de spécifications de qualité de service — 304

Déterminer, pour chaque type de message $m$, un coefficient de priorité en fonction des valeurs de l'ensemble sélectionné — 305

Déterminer, pour chaque type de message $m$, un taux d'allocation de ressources en fonction des coefficients de priorité associés à tous les types de messages — 306

Déterminer, pour chaque type de message $m$, une part de ressources canal à partir du taux d'allocation de ressources associé au type de message $m$ et de la limite d'utilisation canal de la station ITS pour le cycle courant — 307

Déterminer, pour chaque application $App_a$; $a = 1, ..., A$, un stock de ressources pour le cycle courant en fonction de son historique d'utilisation des ressources canal — 308

Au moins une application a un message à transmettre ? — 309

310 — Générer et transmettre le message de l'application ayant le plus grand stock de ressources

312 — Attendre la réception d'au moins une requête de transmission de message d'au moins une application

311 — Mettre à jour le stock de ressources de l'application ayant transmis le message

FIGURE 3

# Fig. 4

Legend:
- ---✕--- CAM_DCC Adaptatif
- – ✳ – CAM_DCC Adaptatif + FLCC
- – ⊟ – CAM_DCC Réactif
- – ✳ – CAM_DCC Réactif + FLCC
- – ◇ – CPM_DCC Adaptatif
- – △ – CPM_DCC Adaptatif + FLCC
- ---▽--- CPM_DCC Réactif
- – + – CPM_DCC Réactif + FLCC

Y-axis: Délai d'attente DCC [ms]
X-axis: Densité de trafic

# Fig. 5

Legend:
- ---✕--- CAM Req
- – ✳ – CAM Tx
- – ⊟ – CPM Req
- ——✕—— CPM Tx
- – ◇ – DEMM Req
- – △ – DEMM Tx

Y-axis: Délai d'attente DCC [ms]
X-axis: Densité de trafic

## Fig. 6

## Fig. 7

**RÉFÉRENCES CITÉES DANS LA DESCRIPTION**

**Littérature non-brevet citée dans la description**

- Integration Challenges of Facilities-Layer DCC for Heterogeneous V2X Services. **KHAN I et al.** 2018 IEEE INTELLIGENT VEHICLES SYMPOSIUM (IV). IEEE, 26 June 2018, 1131-1136